# EUROPEAN PATENT APPLICATION

(11) **EP 1 989 979 A1**
(43) Date of publication of application: **12.11.2008**
(21) Application number: 07380132.6
(22) Date of filing: 10.05.2007
(51) Int. Cl.: A47J 42/08, A47J 42/04

(54) **Container with alternative grinding device**

(71) Applicant: Miniland, S.A., 03430 Onil Alicante (ES)
(72) Inventor: Verdu Frances, José, 03430 Onil (Alicante) (ES)
(74) Representative: Canadell-Isern, Roberto

(57) **Abstract**

The Container with alternative grinding device that comprises the object of this Patent is of the type that has a rigid cylindrical tubular vessel at the base, for the use of which the container is turned upside down from its standing position and a moving part with an interior toothed piece is manually turned in one direction and the other successively to grind the product by trapping it against the interior toothed piece of a part attached to the neck of the container, and closing the grinder with an airtight immovable lid.

The container content is removed by partially raising a central hollow semi-cylindrical stopper (6), which in closed position stays attached to the moving part (1) in whose central opening it is housed, by external peripheral projections (7), and therefore it accompanies this part when it is moved, whereas in open position it is axially moved upwards, pulling on a curved-convex laminar handle provided at the top, although its removal cannot be complete because it is prevented by an end peripheral projection.

## Description

### OBJECT.

The object to which the invention protected by this Patent refers is a container with an alternative grinding device.

### BACKGROUND.

There are numerous types of known containers for solid food products that are used in grounded form, such as spices, coffee, salt, hard cheeses, etc.

In general, they usually consist of a cylindrical, tubular, rigid container, one of the bases of which is equipped with a grinder.

To use them, the container is turned upside down from its standing position so that the product accumulates over the grinder, and a moving part with an interior toothed piece is manually turned in one direction and the other successively to grind the product by trapping it against the interior toothed piece of a part attached to the neck of the container.

The grinder is usually closed with a circular, airtight lid, immovable when it is not in use, in order to prevent evaporation of the aromas or spill of the product contained in it.

### DESCRIPTION OF THE INVENTION

From the preceding description of known grinders, it is deduced that these produce fragments of only one size that are always the same.

The purpose of the invention that comprises the object of this Patent is to facilitate the versatile use of the object device, making it possible to optionally obtain fragments of two different sizes on an alternative basis.

In addition, it allows for the eventual removal of the content from the container, an option which the known devices lack.

All this is achieved with very simple operations, as this is necessary for its culinary application.

In fact, the change from fine grating to course grating is achieved by a brief pull on the moving part in axial direction, causing it to shift with respect to the stationary part, whose interior toothed piece presents a slight conical shape that facilitates the relative separation between the teeth of both pieces and the change of size of the fragments of the ground product.

Reciprocally, the shift from course to fine grating is achieved by an axial retraction of the moving part, which reduces the separation between the teeth of both pieces.

These are fixed in their relative working positions by a mutual joining between internal peripheral projections of the moving part and the corresponding external projections of the neck of the container.

The container content, or part thereof, is removed by partially raising a central, hollow, semi-cylindrical stopper, which in closed position stays attached to the moving part in whose central opening it is housed, by external peripheral projections, and therefore it accompanies this part when it is moved, whereas in open position it is axially moved upwards, pulling on a curved-convex laminar handle provided at the top, although its removal cannot be complete because it is prevented by an end peripheral projection.

### BRIEF DESCRIPTION OF THE DRAWINGS.

To complement the description of the invention and to facilitate interpretation of the formal, structural and functional features of its object, drawings are attached hereto that schematically show different elements of a preferential execution of the "Container with Alternative Grinding Device" that comprises the object of this Patent. In these drawings:

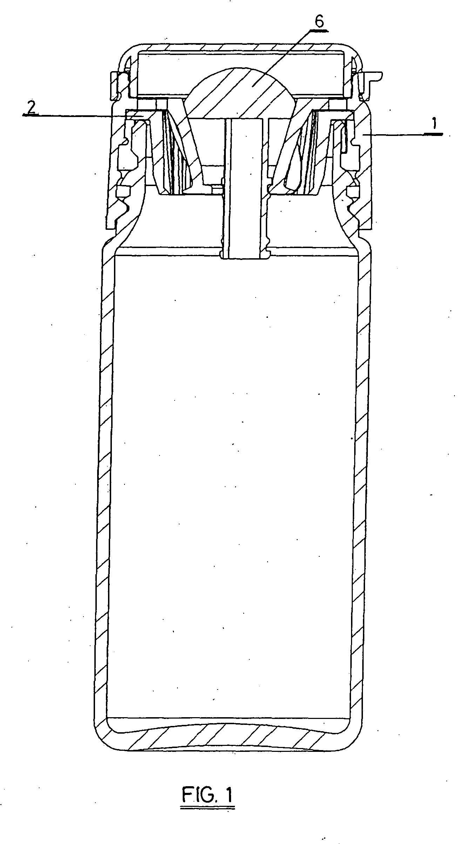

- Figure 1 shows the container and the grinding device, in axial longitudinal section, complete, including its airtight lid.

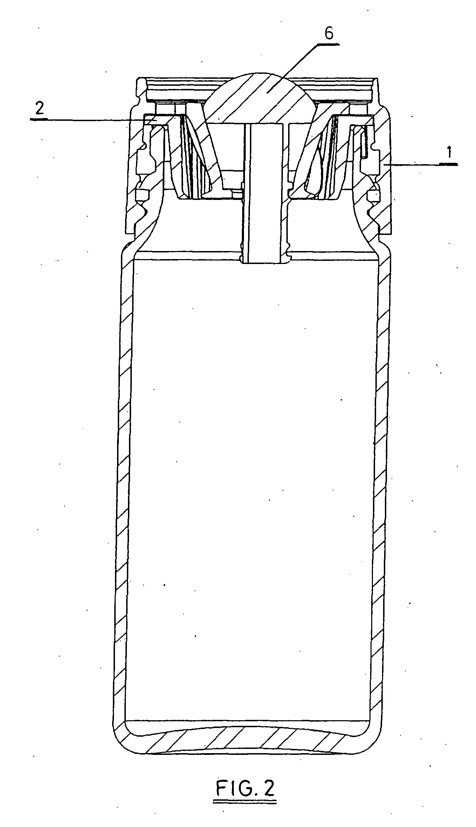

- Figure 2 shows the same section, with the device in usage position (without lid) for fine grinding.

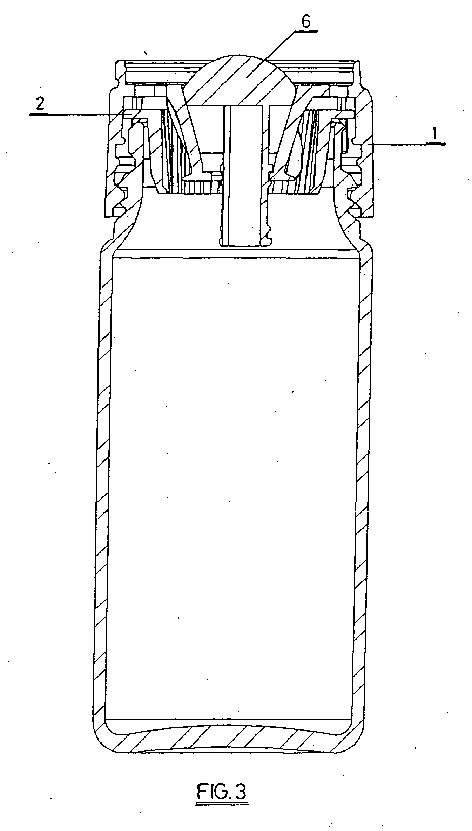

- Figure 3 shows the same section, with the device in course grinding position.

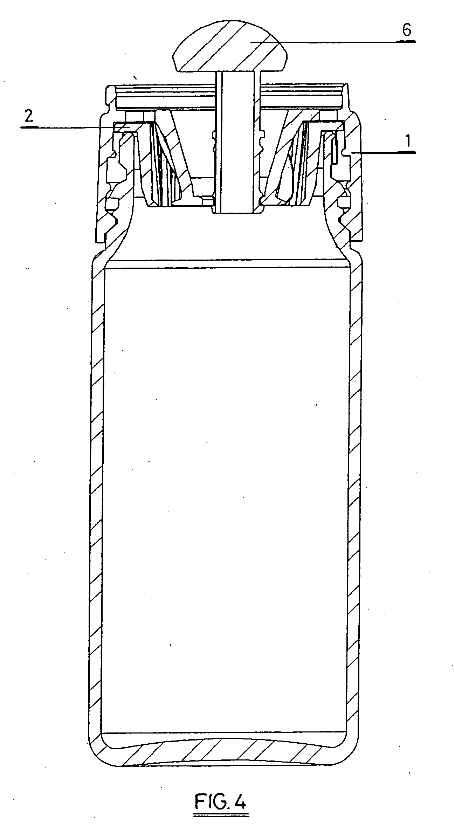

- Figure 4 shows the same section as Figure 3, but with the central stopper raised to facilitate removal of the container contents.

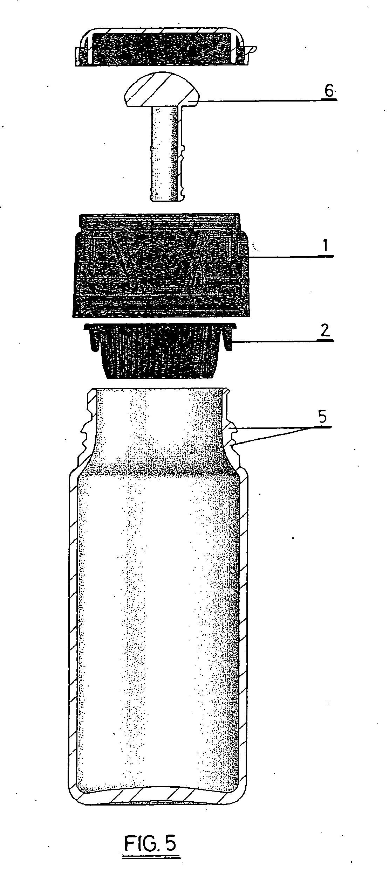

- Figure 5 shows a blowup of the container and device assembly, to show the relative positions of the structural elements of the device.

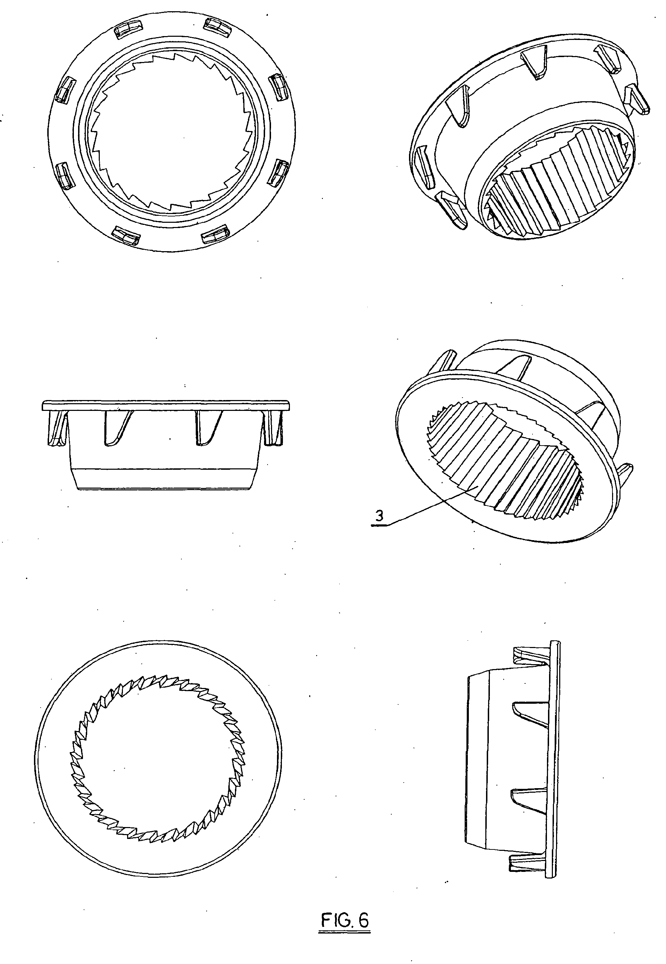

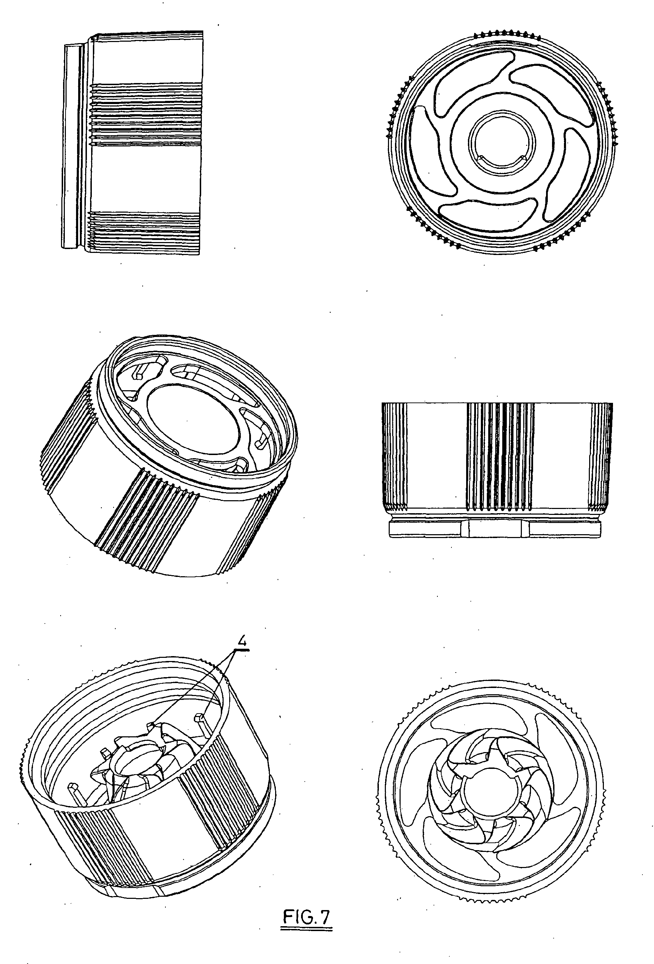

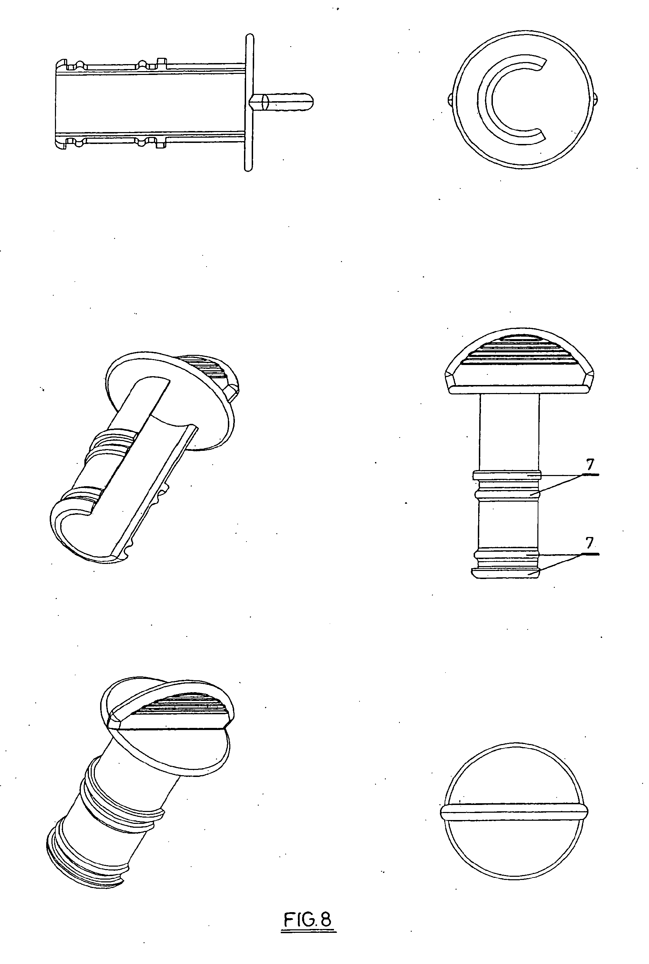

- Figures 6, 7 and 8 show, respectively, the stationary part, the moving part and the central stopper, each of which is shown in six views: side and front elevations, upper and lower sections, and two perspectives.

### DESCRIPTION OF A PREFERENTIAL EXECUTION.

To clearly show the nature and scope of the advantageous application of the "Container with Alternative Grinding Device" that comprises the object of the claimed invention, following is a description of its structure and use with reference to the drawings which, because they represent a preferential execution of this object on an informative basis, should be considered in the broadest sense of the word and not as limitative of the application and the content of the claimed invention.

The container with alternative grinding device for grinding solid food products is of the type that has a rigid cylindrical tubular vessel at the base, for the use of which the container is turned upside down from its standing position and a moving part with an interior toothed piece is manually turned in one direction and the other successively to grind the product by trapping it against the interior toothed piece of a part attached to the neck of the container; the grinder is closed with an airtight, immovable lid.

The change from fine grating to course grating is achieved by pulling on the moving part (1) in axial direction, causing it to shift with respect to the stationary part (2), whose straight interior toothed piece (3) presents a slight conical shape that facilitates the relative separation between the teeth of both pieces and the change of size of the fragments of the ground product, fixing their relative working positions by a mutual joining between internal peripheral projections (4) of the moving part (1) and the corresponding external projections (5) of the neck of the container.

The container content is removed by partially raising a central hollow semi-cylindrical stopper (6), which in closed position stays attached to the moving part (1) in whose central opening it is housed, by external peripheral projections (7), and therefore it accompanies this part when it is moved, whereas in open position it is axially moved upwards by pulling on a curved-convex laminar handle provided at the top, although its removal cannot be complete because it is prevented by an end peripheral projection.

## Claims

1. **^{a} :** Container with alternative grinding device for grinding solid food products, of the type that has a rigid cylindrical tubular vessel at the base, for the use of which the container is turned upside down from its standing position and a moving part with an interior toothed piece is manually turned in one direction and the other successively to grind the product by trapping it against the interior toothed piece of a part attached to the neck of the container, and closing the grinder with an airtight immovable lid, **characterized by** the fact that the switch from fine grating to course grating is achieved by pulling on the moving part (1) in axial direction, causing it to shift with respect to the stationary part (2), whose straight interior toothed piece (3) presents a slight conical shape that facilitates the relative separation between the teeth of both pieces and the change of size of the fragments of ground product, fixing their relative working positions by a mutual joining between internal peripheral projections (4) of the moving part (1) and the corresponding external projections (5) of the neck of the container.

2. **^{a} :** Container with alternative grinding device, according to Claim 1, **characterized by** the fact that the container content is totally or partially removed by partially raising a central hollow semi-cylindrical stopper (6), which in closed position stays attached to the moving part (1) in whose central opening it is housed, by external peripheral projections (7), and therefore it accompanies this part when it is moved, whereas in open position it is axially moved upwards, pulling on a curved-convex laminar handle provided at the top, although its removal cannot be complete because it is prevented by an end peripheral projection.
